# EUROPEAN PATENT APPLICATION

(11) **EP 2 865 866 A1**
(43) Date of publication of application: **29.04.2015**
(21) Application number: 13806357.3
(22) Date of filing: 13.06.2013
(51) Int. Cl.: F02C 7/00, F01D 25/00, F01D 25/24, F02K 3/06, F04D 29/02, F04D 29/52

(54) **FAN CASE FOR AIRCRAFT ENGINE**

(30) Priority: 21.06.2012 JP 2012139484
(71) Applicant: Kawasaki Jukogyo Kabushiki Kaisha, Kobe-shi, Hyogo 650-8670 (JP)
(72) Inventor: OHTANI, Kazuya, Akashi-shi Hyogo 673-8666 (JP); MIYAMOTO, Hiroaki, Akashi-shi Hyogo 673-8666 (JP); KAWASAKI, Takumi, Akashi-shi Hyogo 673-8666 (JP); MATSUBARA, Go, Akashi-shi Hyogo 673-8666 (JP); HASEGAWA, Takeshi, Akashi-shi Hyogo 673-8666 (JP)
(74) Representative: Von Kreisler Selting Werner - Partnerschaft von Patentanwälten und Rechtsanwälten mbB
(86) International application number: PCT/JP2013/066295
(87) International publication number: WO 2013/191070

(57) **Abstract**

An annular fan case (FC) which covers an outer periphery of a fan in an aircraft engine includes: a case body (21) including a first composite material containing a fiber and a resin; and a containment section (22) including a second composite material containing a fiber and a resin, the containment section (22) being formed on an outer periphery of the case body (21). A resin content of the containment section (22) is set to be lower than the resin content of the case body (21).

## Description

### CROSS REFERENCE TO THE RELATED APPLICATION

This application is based on and claims Convention priority to Japanese patent application No. 2012-139484, filed June 21, 2012, the entire disclosure of which is herein incorporated by reference as a part of this application.

### BACKGROUND OF THE INVENTION

### (Field of the Invention)

The present invention relates to a fan case which covers the outer periphery of a fan in an aircraft engine.

### (Description of Related Art)

In an aircraft engine, the weight thereof greatly affects the fuel consumption performance of an aircraft, and thus, weight reduction of the aircraft engine has been an important issue. In particular, in turbofan engines and turbojet engines, various attempts have been made to reduce the weight of the fan case being a component that accounts for a relatively large proportion in weight, and as a result, certain improvement has been attained. Representatives of such improved fan cases are those using a raw material other than metal which has been conventionally used as a raw material in general. Examples of such fan cases include a CFRP fan case, a fan case including an aluminum case body having Kevlar (registered trademark) fibers wound therearound multiple times, and still further, a fan case including a case body whose outer periphery is covered with an elastic containment belt (see Patent Document 1).

On the other hand, the fan case is required to have a containment function of, at occurrence of FBO (Fan Blade Off) which is an event that a portion of a large number of fan blades provided radially on the outer periphery of a hub in the fan is chipped off due to some cause and thrown away due to the centrifugal force, flexibly receiving thrown chips or fragments so as to prevent the fragments from penetrating through the fan case. Therefore, weight reduction of the fan case needs to be performed while the containment function is ensured.

### [Prior Art Literature]

### [Patent Document]

[Patent Document 1] Japanese National Phase PCT Laid-Open Publication No. 2002-516945

### SUMMARY OF THE INVENTION

The metal fan case is a simple one manufactured by cutting a metal raw material, but it is difficult to achieve sufficient weight reduction while ensuring the containment function. The CFRP fan case is intended to realize weight reduction by using a composite material having greater specific strength than metal. Further, an aluminum/Kevlar fiber fan case is provided with a necessary rigidity as a case by the use of aluminum, and with a containment function by the use of Kevlar fibers. These CFRP fan case and aluminum/Kevlar fiber fan case can achieve a certain level of weight reduction compared with metal fan cases, but with these fan cases, it is difficult to realize further weight reduction while sufficiently ensuring the containment function.

Moreover, with respect to the aluminum/Kevlar fiber fan case, the deformation amount of the fan case is large when FBO has occurred. Thus, the aluminum/Kevlar fiber fan case may cause interference with surrounding components such as a cowl on the outside. On the other hand, if the number of windings of Kevlar fiber is increased in order to reduce the deformation amount of the fan case, weight reduction cannot be attained.

Therefore, an object of the present invention is to provide a fan case for an aircraft engine, which is able to realize sufficient weight reduction while ensuring required containment performance.

In order to achieve the above object, a fan case for an aircraft engine according to the present invention is constituted to cover an outer periphery of a fan including fan blades, the fan case including: a case body including a first composite material containing a fiber and a resin; and a containment section including a second composite material containing a fiber and a resin, the containment section being formed on an outer periphery of the case body, wherein a resin content of the containment section is set to be lower than a resin content of the case body.

Since the containment section has a lower resin content than the case body, the fiber bonding strength between fibers is rendered to be weak. Accordingly, the containment section has flexibility that allows fibers to be displaced relative to each other. When fibers are bonded together, breakage due to shear occurs, but when fibers are displaced relative to each other, breakage due to tension occurs. Therefore, in the containment section, among all fibers that are broken when fan blade fragments having flown away and collided therewith, the proportion of fibers that are broken due to tension increases, while the proportion of fibers that are broken due to shear decreases. In general, breakage due to tension requires more energy than breakage due to shear, and hence, the amount of energy that can be absorbed in the entirety of the containment section increases. In other words, the containment section has a high containment function that can prevent fan blade fragments from penetrating therethrough. Accordingly, the case body need not have a containment function. Thus, sufficient weight reduction of the case body can be attained while allowing the case body to have high strength and high rigidity that can realize assurance of a tip clearance relative to the tip portion of each fan blade, retainment of each stator vane, and the like.

Preferably, the containment section is formed on an outer periphery of a portion of the case body which portion faces the fan blades from radially outside. Accordingly, the area where the containment section is formed can be reduced, and further weight reduction can be realized.

The fibers in the respective first and second composite materials may be identical in composition, and the resins in the respective first and second composite materials may be identical in composition. Accordingly, the number of kinds of fiber and resin to be used is reduced, and thus, productivity can be increased.

Preferably, the resin content of the containment section is 12 to 15% by weight. Preferably, the resin content of the case body is about 32 to 40% by weight. Accordingly, the containment function and the weight reduction can be realized in good balance.

For example, the fiber forming the first or second composite material is a fiber selected from the group consisting of carbon fibers, glass fibers, and aramid fibers, and the resin forming the first or second composite material is a resin selected from the group consisting of epoxy resins, phenol resins, bismaleimide resins and polyimide resins. With these materials, light and high strength composite materials can be obtained.

### BRIEF DESCRIPTION OF THE DRAWINGS

Fig. 1 schematically shows the structure of an aircraft engine on which a fan case according to one embodiment of the present invention is mounted;
Fig. 2 is a front view showing the aircraft engine;
Fig. 3 is a longitudinal sectional view showing a fan and the fan case in the aircraft engine;
Fig. 4A is a cross-sectional view schematically showing the internal structure of a case body of the fan case;
Fig. 4B is a cross-sectional view schematically showing the internal structure of a containment section of the fan case;
Fig. 5 is a schematic diagram showing the internal structure of the case body of the fan case when a fan blade fragments having been chipped off and thrown away has collided with the case body;
Fig. 6 is a schematic diagram showing the internal structure of the containment section of the fan case when a fan blade piece having been chipped off and thrown away has collided with the containment section;
Fig. 7A is a cross-sectional view schematically showing the internal structure of the case body of the fan case according to an Example of the present invention;
Fig. 7B is a cross-sectional view schematically showing the internal structure of the containment section of the fan case according to an Example of the present invention; and
Fig. 8 shows characteristics of absorbed energy at the containment section in the Example.

### DESCRIPTION OF EMBODIMENTS

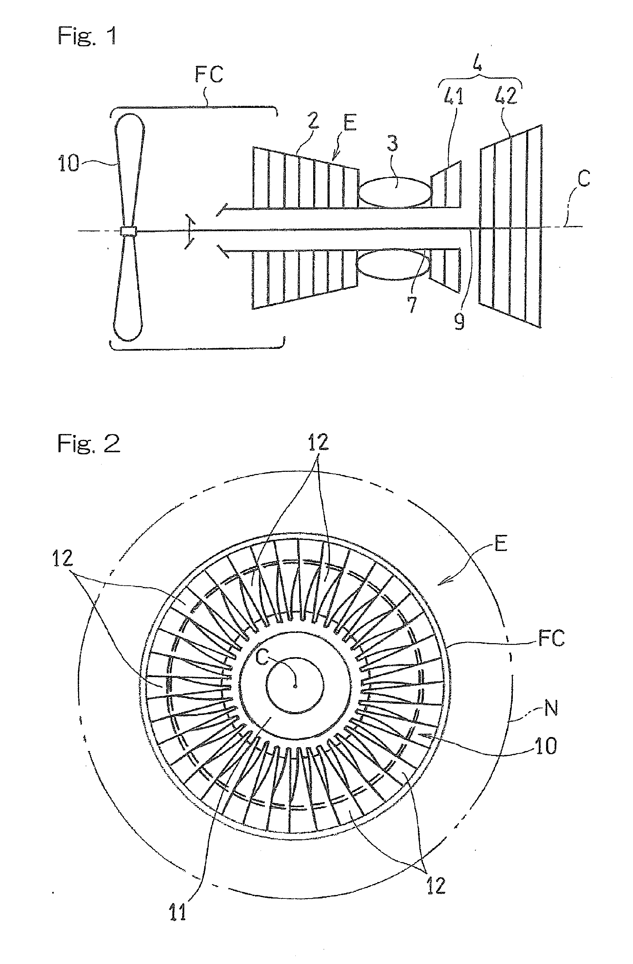

Hereinafter, a preferred embodiment of the present invention will be described with reference to the drawings. In Fig. 1, a jet engine E for an aircraft is a two-shaft turbofan engine, and includes a compressor 2, a combustor 3, a turbine 4, and a fan 10, as main components. Compressed air supplied from the compressor 2 is mixed with fuel and the mixture is combusted in the combustor 3. Combustion gas of high temperature and high pressure generated as a result of the combustion is supplied to the turbine 4. The turbine 4 includes a high pressure turbine 41 on the former stage side and a low pressure turbine 42 on the latter stage side. The compressor 2 is connected to the high pressure turbine 41 via a high pressure shaft 7 which is hollow, and is driven to rotate by the high pressure turbine 41.

The fan 10 is connected to the low pressure turbine 42 via a low pressure shaft 9 inserted through the hollow portion of the high pressure shaft 7, and is driven to rotate by the low pressure turbine 42. The fan 10 is mounted to the front end of the low pressure shaft 9, and is covered with a fan case FC. The high pressure shaft 7 and the low pressure shaft 9 are in concentric arrangement having a common engine shaft center C. By a jet flow of combustion gas ejected from the low pressure turbine 42 and a high speed air flow generated by the fan 10, engine thrust is obtained.

As shown in Fig. 2, in the fan 10, a large number of fan blades (rotor vanes) 12 are radially provided along radial directions of the engine E, on the outer periphery of a hub 11 connected so as to integrally rotate with the low pressure shaft 9 (Fig. 1). The fan 10 is housed in the fan case FC having an annular shape (cylindrical shape) which covers the outer periphery of the fan 10. In case when a portion of fan blades 12 has been chipped off and thrown away, it is received within the fan case FC so as not to break out of the engine E. The entirety of the engine E including the fan 10 and the fan case FC is covered with an engine nacelle N.

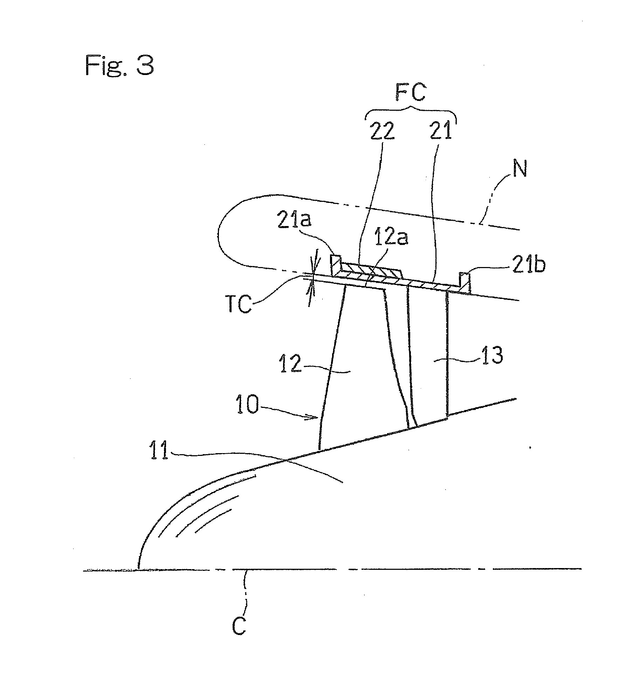

As shown in Fig. 3, the fan 10 is provided with fan stator vanes 13 downstream of the fan blades 12. The fan case FC includes a case body 21 having flanges 21a and 21b respectively extending outwardly from both axial ends of the cylindrical body, and a containment section 22 mounted on the outer periphery surface of the case body 21. The containment section 22 is formed only on the outer periphery of a portion of the case body 21 which portion faces the fan blades 12 from radially outside. The length in the axial direction of the containment section 22 is set to be greater than the axial length of a tip portion 12a of each fan blade 12. The case body 21 is formed from a first composite material containing a fiber and a resin, and the containment section 22 is formed from a second composite material containing a fiber and a resin. In this embodiment, the first and second composite materials are formed from the same fiber and the same resin, but the resin content in the composite material for the containment section 22 is set to be lower than that of the case body 21.

Composite materials, light in weight and of high strength, as the raw materials of the case body 21 and the containment section 22, can preferably employ a carbon fiber, a glass fiber, an aramid fiber, or the like, as the fiber. As the resin which serves as a base material to be filled among a plurality of layers made of this fiber and to bond adjacent two fiber layers, a thermosetting resin such as an epoxy resin, a phenol resin, a bismaleimide resin, or a polyimide resin can be preferably used. In manufacturing, the composite material for forming the case body 21 is laminated on a frame or mold for lamination, the composite material for forming the containment section 22 is laminated thereon, and then, both composite materials are heated to be cured.

The case body 21 of the fan case FC is set to have an inner diameter that allows the case body 21 to face, with a required small tip clearance TC, the tip portion 12a of each fan blade 12. In order to increase the engine efficiency, the inner peripheral surface of the case body 21 is controlled with a high dimensional accuracy, and the case body 21 is required to have strength and rigidity that can always ensure the required small tip clearance TC. Thus, the case body 21 is formed of a high rigidity composite material that is hard and less likely to deform. That is, in this embodiment, the composite material for the case body 21 employs a composite material that has been conventionally used in general, in which a resin is sufficiently contained among a plurality of fiber layers laminated in the radial direction, and the resin content is set to a value that realizes high strength and high rigidity.

Separately from the case body 21, the fan case FC includes the containment section 22 on the outer periphery side of the case body 21. As described later, the containment section 22 has a containment function of preventing fan blade segments that have been chipped off and thrown away at occurrence of FBO, from breaking out of the fan case FC. Therefore, the case body 21 need not have the containment function, and thus, weight reduction of the case body 21 can be performed while allowing strength and rigidity that can realize assurance of the required tip clearance TC, retainment of the stator vanes 13, and the like. Actually, the rigidity of the case body 21 is higher than the rigidity of the containment section 22.

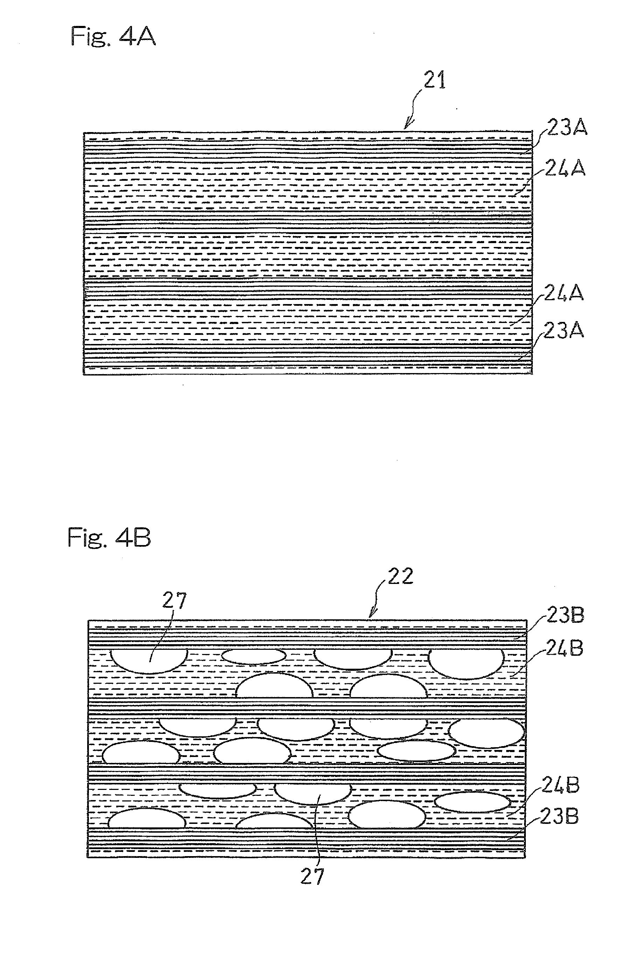

As schematically shown in Fig. 4A, the case body 21 in the fan case FC is set to have a normal resin content used in general that allows high strength and high rigidity. A resin 24A is sufficiently filled between layers made of a fiber 23A, and the fibers 23A of the respective layers are strongly bonded to each other. Thus, the fibers 23A are in a state where they are less likely to be separated (delaminated) from each other.

On the other hand, as schematically shown in Fig. 4B, the containment section 22 in the fan case FC is set to have a resin content lower than the normal resin content of the case body 21 as shown in Fig. 4B. Since the amount of a resin 24B functioning as a bonding material is small, the resin 24B is not sufficiently filled between layers made of a fiber 23B. Accordingly, many non-impregnated portions 27, such as bubbles, which are not impregnated with resin emerge. As a result, the fiber bonding strength which bonds the fibers 23B of the respective layers together is weak, and the fibers 23B are easy to separate (delaminate) from each other and to be displaced relative to each other. Thus, compared with the case body 21, the containment section 22 has flexibility that allows the fibers 23B to be flexibly deflect.

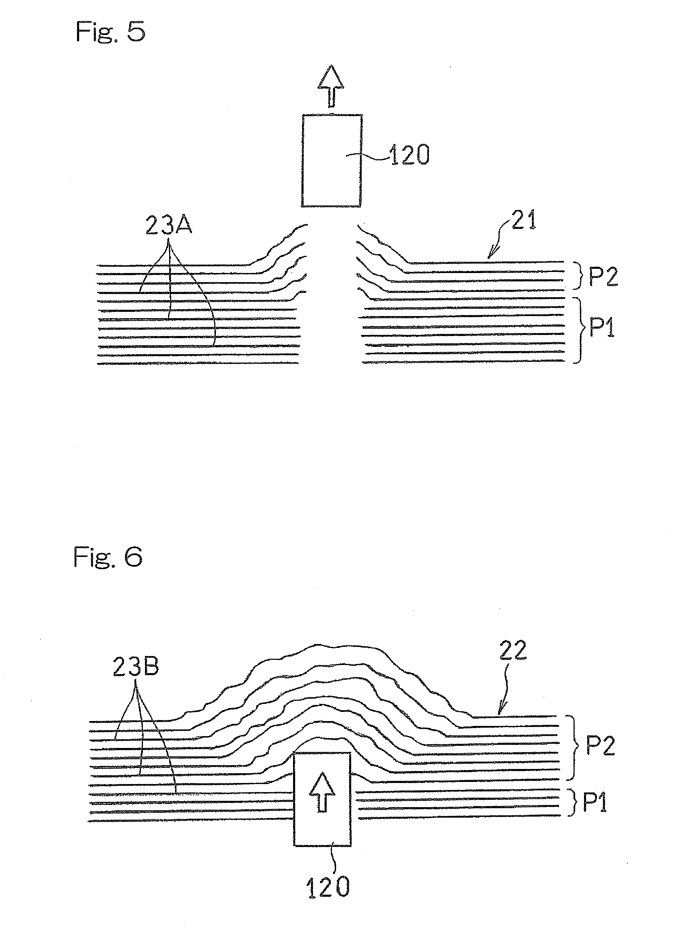

Fig. 5 and Fig. 6 schematically show deformation states of the internal structures of the case body 21 and the containment section 22, in a case where fan blade fragments 120 has chipped off at occurrence of FBO, and collided with the case body 21 and the containment section 22, respectively. In Fig. 5, when the chipped fan blade fragments 120 has collided with the case body 21, since the fibers 23A are less likely to delaminate from each other, a shear area P1 in the radial direction in which the fibers 23A rupture or break mainly due to a shear force is large, and a delamination area P2 in the radial direction in which the fibers 23A rupture or break mainly due to tension is small.

On the other hand, as shown in Fig. 6, when the chipped fan blade fragments 120 has collided with the containment section 22, since the fibers 23B are in a flexible state where they are easy to delaminate from each other, the shear area P1 is small, and the delamination area P2 is large. That is, in the containment section 22, since the bonding force among the fibers 23B is weak, the fibers 23B can flexibly move. Thus, in association with decrease of the shear force applied on the fibers 23B, the proportion of the fibers 23B that rupture due to tension increases, and as a result, the delamination area P2 increases.

In general, when the fibers 23A and 23B rupture, rupture due to tension requires a larger amount of energy than rupture due to shear. In other words, the amount of energy necessary for the fiber 23A, 23B to rupture due to the chipped fan blade fragments 120 is larger in the delamination area P2 than in the shear area P1. Therefore, due to the presence of the containment section 22, the case body 21 whose shear area P1 is larger than that of the containment section 22 can be structured as to allow the fan blade fragments 120 to penetrate therethrough, as shown in Fig. 5. Accordingly, weight reduction of the case body 21 can be realized while allowing required strength and required rigidity. On the other hand, in the containment section 22 having a larger proportion of the delamination area P2 than that of the case body 21, the amount of shock absorption energy against the fan blade fragments 120 colliding therewith is large. Thus, as shown in Fig. 6, the containment section 22 exhibits an excellent containment function of preventing the fan blade fragments 120 which has penetrated through the case body 21 to advance into the containment section 22, from penetrating through the containment section 22.

As described above, the fan case FC shown in Fig. 3 includes the case body 21 which covers the fan 10, and the containment section 22 for the containment function, and the containment section 22 is provided with the containment function, simply by setting the resin content thereof to be lower than the resin content of the case body 21 to improve the flexibility thereof. Accordingly, in a case where the fan case FC has the same weight as that of an existing fan case, the fan case FC has higher containment ability than the existing one. In a case where the fan case FC has containment ability equivalent to that of an existing fan case, the fan case FC can be made lighter in weight than the existing one. Further, since the containment section 22 is provided only on a portion of the case body 21 which portion faces the fan blades 12 from radially outside, further weight reduction can be realized. In the embodiment, for the case body 21 and the containment section 22, composite materials of a combination of the same raw materials which are identical in composition are used, and they are formed simply by changing the resin content. Accordingly, there is no need to prepare two kinds of composite materials and thus, productivity is rendered to be high.

Next, examples of the present invention will be described.

### (Example of the case body 21)

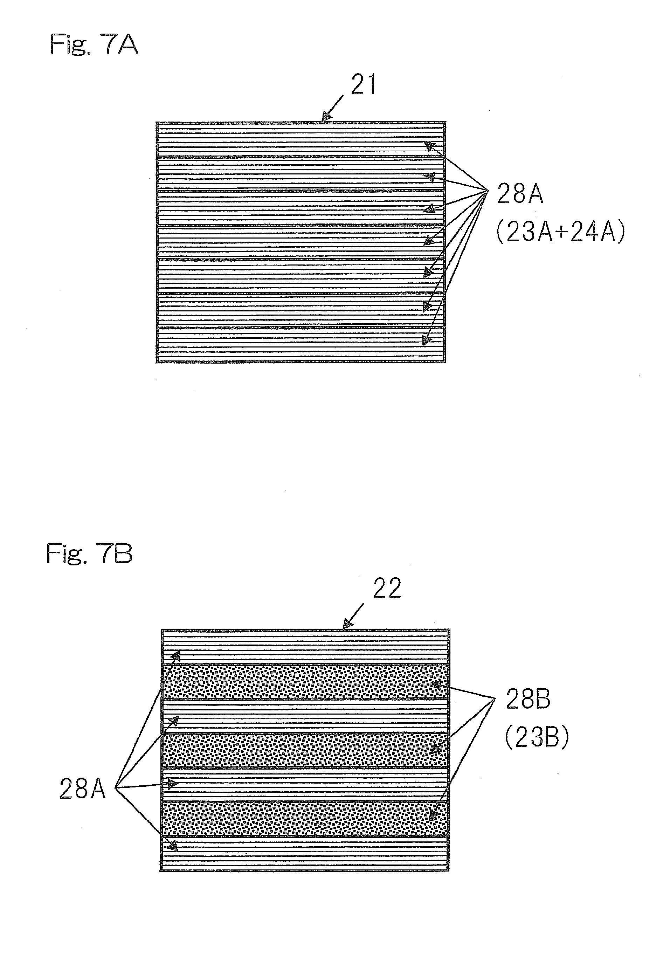

As shown in Fig. 7A, the case body 21 is formed by laminating only multiple prepregs 28A each obtained by laying the fiber 23A shown below to form a layer and causing the resin 24A to be contained therein by a certain amount in advance. The resin content of the prepreg 28A is 35% by weight (hereinafter, may be expressed simply as "%") substantially the same as that of a general prepreg.
The fiber 23A = carbon fiber
The resin 24A = epoxy resin

### (Example of the containment section 22)

The fiber 23B below is laid in one direction, and then, the fiber 23B is laid thereon in a direction perpendicular thereto. This laying process is repeated desired times. Then, so laid fibers 23 are sewn together with a polyester thread to obtain an intermediate fiber layer 28B. Then, as shown in Fig. 7B, the intermediate fiber layers 28B are each interposed between the prepregs 28A which are the same as those employed in the case body 21. Each intermediate fiber layer 28B is composed of fibers not impregnated with resin. Therefore, the containment section 22 including the intermediate fiber layers 28B contains a less amount of the resin and a larger amount of the fiber as a whole, than the case body 21 composed only of the prepregs. That is, the resin content in the containment section 22 is low. It should be noted that the resin contained in the prepregs 28A becomes fluid while being heat-cured, and spreads also inside the intermediate fiber layers 28B, whereby the distribution of the resin after the heat curing becomes almost uniform. Moreover, the polyester thread contained in the intermediate fiber layer 28B accounts for a very small proportion in weight and thus can be ignored. Thus, the resin content of the containment section 22 was set to 12%.

The fiber 23B of the intermediate fiber layer 28B = carbon fiber

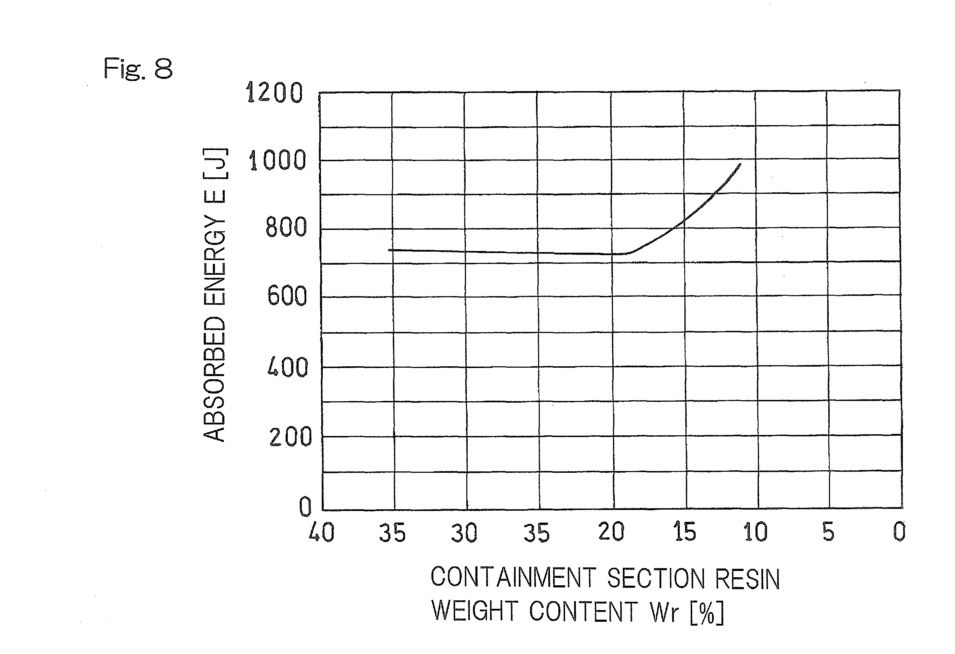

Fig. 8 shows changes in absorbed energy vs changes in the resin content (% by weight) obtained through experiments when the surface density of the containment section 22 shown in Fig. 7B was set to 1.2 g/cm². As seen from Fig. 8, with respect to the containment section 22, when the resin content is 15% or lower, the absorbed energy is greater, by 10% or higher, than the absorbed energy at the resin content 35%, which corresponds to a general composite material. When the resin content is lower than 12%, the bond between the resin and the fiber becomes weak, and the shape of the composite material cannot be maintained. Therefore, the resin content of the containment section 22 is preferably 12 to 15%.

In order to maintain high rigidity, the resin content of the case body 21 is preferably about 32 to 40%, in particular around 35%. By using such composite materials as the case body 21 and the containment section 22, the containment function and the weight reduction can be realized in good balance.

In the embodiment, an exemplary case has been shown in which the case part 21 and the containment section 22 are formed from composite materials each being a combination of the same fiber and the same resin. However, the present invention is not limited thereto. The case body 21 and the containment section 22 may respectively employ composite materials in which at least one of the fiber and the resin is set to be different.

The present invention is not limited to the embodiment described above, and various additions, modifications, and deletions are possible without departing from the scope of the present invention. Such additions, modifications, and deletions are to be construed as included in the scope of the present invention.

### [REFERENCE NUMERALS]

- 10: fan
- 12: fan blade
- 21: case body
- 22: containment section
- 23A, 23B: fiber
- 24A, 24B: resin
- 28A: prepreg
- 28B: intermediate fiber layer
- 120: fan blade fragments
- FC: fan case

## Claims

1. A fan case for an aircraft engine, for covering an outer periphery of a fan including fan blades, which comprises:
a case body including a first composite material containing a fiber and a resin; and
a containment section including a second composite material containing a fiber and a resin, the containment section being formed on an outer periphery of the case body, wherein
a resin content of the containment section is set to be lower than a resin content of the case body.

2. The fan case as claimed in claim 1, wherein
the containment section is formed on an outer periphery of a portion of the case body which portion faces the fan blades from radially outside.

3. The fan case as claimed in claim 1 or 2, wherein
the fibers in the respective first and second composite materials are identical in composition, and the resins in the respective first and second composite materials are identical in composition.

4. The fan case as claimed in any one of claims 1 to 3, wherein
the resin content of the containment section is 12 to 15% by weight.

5. The fan case as claimed in claim 4, wherein
the resin content of the case body is 32 to 40% by weight.

6. The fan case as claimed in any one of claims 1 to 5, wherein
the fiber forming the first or second composite material is a fiber selected from a group of carbon fibers, glass fibers and aramid fibers.

7. The fan case as claimed in any one of claims 1 to 6, wherein
the resin forming the first or second composite material is a resin selected from a group of epoxy resins, phenol resins, bismaleimide resins, and polyimide resins.
